# EUROPEAN PATENT SPECIFICATION

(11) **EP 1 511 667 B1**
(45) Date of publication and mention of the grant of the patent: **05.08.2009**
(21) Application number: 03728204.3
(22) Date of filing: 23.05.2003
(51) Int. Cl.: B62D 12/00, B62D 5/09, B62D 1/22, F15B 13/02

(54) **CONTROL SYSTEM AND A VEHICLE COMPRISING THE CONTROL SYSTEM**
STEUERSYSTEM UND DAS STEUERSYSTEM ENTHALTENDES FAHRZEUG
SYSTEME DE COMMANDE ET VEHICULE EQUIPE DE CE SYSTEME

(30) Priority: 29.05.2002 SE 0201604
(43) Date of publication of application: 09.03.2005
(73) Proprietor: Volvo Construction Equipment AB, 631 85 Eskilstuna (SE)
(72) Inventor: VIGHOLM, Bo, S-640 40 Stora Sundby (SE); STRANDBERG, Lennart, S-791 92 Falun (SE)
(74) Representative: Fröhling, Werner Otto
(86) International application number: PCT/SE2003/000842
(87) International publication number: WO 2003/099637

(56) References cited:
- EP-A1- 0 547 570
- EP-A1- 0 636 530
- WO-A1-98/45155
- WO-A1-99/55573
- DE-A1- 4 314 616

## Description

### FIELD OF THE INVENTION AND PRIOR ART

The present invention relates to a system for controlling at least one hydraulic cylinder comprising a first control valve unit, which is connected to said hydraulic cylinder for regulation of the latter, a first operable control means which is adapted for controlling the first control valve unit, a second control valve unit, which is also connected to said hydraulic cylinder for regulation of the latter, and a second operable control means which is adapted for controlling the second control valve unit, the system comprising means for prioritizing the first control means.

Such a control system is found in, for example, various types of work vehicle comprising a front part and a rear part, which parts each have at least one wheel axle. The vehicle parts are interconnected in an articulated manner, and the parts are rotatable relative to one another around said articulation via two hydraulic cylinders arranged between the two parts. A loading machine, such as a wheel loader or a dumper, is an example of such a work vehicle. In this case, the first control means consists of the steering wheel of the vehicle, and the second control means consists of a lever, or joystick.

The invention will be described below in a case in which the control system is arranged in a loading machine for controlling its steering cylinders. This is to be regarded as an in no way limiting example within the area of application of the invention.

Steering in a loading machine has high safety requirements. As a rule, a loading machine has normal wheel steering, but may also in parallel be equipped with lever steering. The wheel is used during transport, and the lever is used for work at lower speeds such as, for example, for loading a truck, in order to increase driver comfort.

The control system is usually designed in such a way that the driver, by means of the wheel steering, mechanically regulates a hydraulic valve which in turn transmits hydraulic energy to the steering cylinders. The lever steering also transmits hydraulic energy to the steering cylinders, but its hydraulic valve is usually controlled by electric signals, that is to say the driver moves the lever, which in turn generates an electric signal. In some cases, it is desirable to manipulate the electric signal from the lever (ramps, maximum levels etc.), which can be effected by virtue of the signals from lever to hydraulic valve being transmitted via a machine computer.

The lever steering with its electronics is a complex system with many sources of failure. In order to increase safety, the control system can be designed so that the wheel steering has top priority, that is to say if the steering wheel and the lever are used at the same time, it is the wheel which prevails. If an error occurs in the lever steering (for example steering takes place in spite of the lever being in neutral position or if the lever has locked in a certain position), the driver can use the steering wheel and thus steer the machine in a safe way. One way of carrying out prioritization is for the machine computer to receive a signal via a sensor which senses that the driver is using the wheel, the computer thus being able to suppress the control signals going out to the hydraulic valve of the lever steering. One problem with

A hydraulic steering system for a vehicle, where a steering action with a first steering mechanism takes priority over a steering action with a second steering mechanism, is disclosed in WO99/55573. The preamble of claim 1 has been based on the prior art disclosed in WO99/55573. such a system is that the quality requirements for the machine computer and other electronics are very high, which results in high costs.

### SUMMARY OF THE INVENTION

A primary object of the invention is to produce a control system for prioritizing a specific control means, which provides increased safety relative to prior art. A secondary object is to produce a control system which affords opportunities for increased cost-effectiveness. These objects are achieved by the system defined in claim 1.

According to another embodiment, the prioritizing means is connected to the first control valve unit in such a way that prioritization is initiated when the first control valve unit is moved. This affords opportunities for simple control and a cost-effective control system.

According to another embodiment, the system comprises a pump which is adapted to be driven depending on the load to which the system is subjected. The prioritizing means also comprises a prioritizing valve which is connected hydraulically to the second control valve unit. The prioritizing valve is moreover connected to a line which is connected to the pump for controlling the prioritizing valve depending on the load. In other words, the system is load-sensing. The prioritizing valve is therefore controlled by the pressure in the line for load-sensing.

Further preferred embodiments and advantages of the invention emerge from the description below.

### BRIEF DESCRIPTION OF FIGURES

The invention will be described in detail below with reference to the embodiments shown in the accompanying drawings, in which
- FIG. 1: shows diagrammatically a wheel loader in a view from above, and
- FIGS 2-6: show five preferred embodiment of the invention.

### DETAILED DESCRIPTION OF PREFERRED EMBOIDMENTS

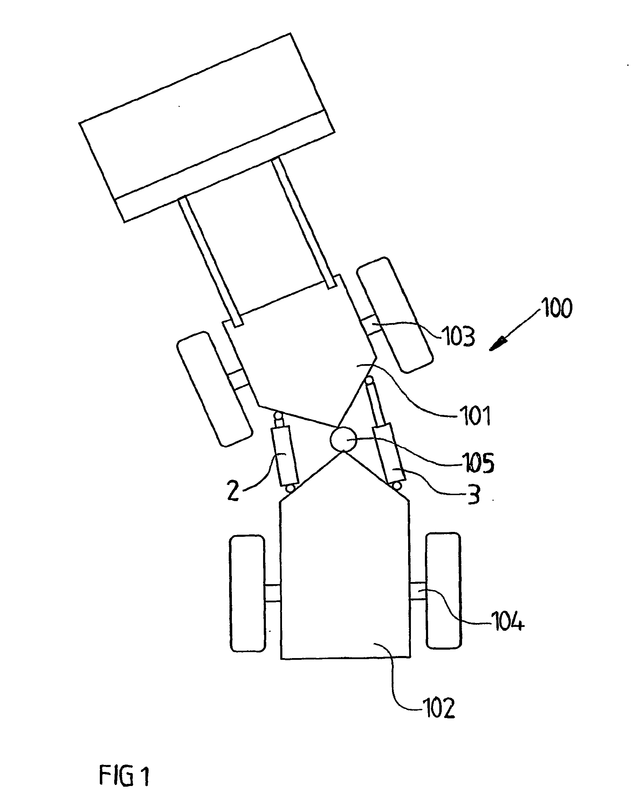

Fig. 1 shows a diagrammatic view from above of a truck in the form of a wheel loader 100. The wheel loader 100 comprises a front part 101 and a rear part 102, which parts each have a wheel axle 103, 104. The vehicle parts 101, 102 are interconnected in an articulated manner, and the parts are rotatable relative to one another around an articulation 105 via two hydraulic steering cylinders 2, 3 which are arranged between the two parts.

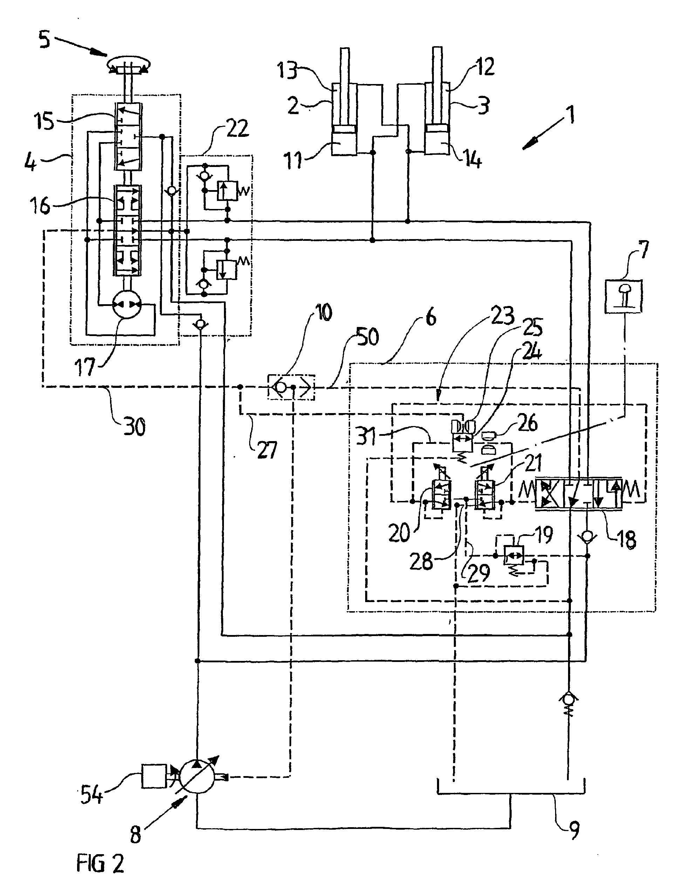

Fig. 2 shows a hydraulic system 1 for regulating the two hydraulic cylinders 2, 3 of the wheel loader 100. The lines marked by solid lines indicate main lines, and the lines marked by dashed lines indicate pilot lines for regulating various components in the system.

The system comprises a first control valve unit 4 which is regulated mechanically by a first control means 5 in the form of the steering wheel of the vehicle. The system also comprises a second control valve unit 6 which is controlled electronically via a second control means 7 in the form of a lever. The control via the lever 7 is shown diagrammatically by a dot-dash line.

The system is load-sensing (LS) and comprises a variable displacement pump 8 and a tank 9. The pump 8 is driven by the propulsion engine 54 of the vehicle, in the form of a diesel engine. The pump 8 senses the pressure (an LS signal) from the steering cylinders 2, 3 via a shuttle valve 10 and via the control valve unit 4, 6 which is activated. The pump then sets a pressure which is a certain number of bar higher than the pressure of the steering cylinders. This brings about an oil flow out to the steering cylinders 2, 3, the level of which depends on the extent to which the activated control valve unit 4, 6 is operated.

The hydraulic cylinders 2, 3 are adapted in such a way that the piston side 11 of the first hydraulic cylinder 2 and the piston-rod side 12 of the second hydraulic cylinder 3 are connected to the pump 8 for steering the vehicle to the right, and the piston-rod side 13 of the first hydraulic cylinder 2 and the piston side 14 of the second hydraulic cylinder 3 are connected to the pump for steering the vehicle to the left.

The connection of the hydraulic cylinders 2, 3 to the pump 8 and thus the regulation of the hydraulic cylinders can be carried out either via wheel steering by means of the control valve unit 4 or via lever steering by means of the control valve unit 6.

The first control valve unit 4 comprises two valves, or slides, 15, 16, which are arranged one outside the other for rotation relative to one another. In the figure, however, the slides 15, 16 are illustrated diagrammatically for linear movement. The control valve unit 4 also comprises a hydraulic motor 17 which is adapted in such a way that the lower slide 16 in the figure "hunts" the upper slide 15 in order to close it. When the driver rotates the steering wheel, a certain quantity of oil is supplied to the hydraulic cylinder 2, 3, which results in a certain degree of operation. The operation ends when the lower slide 16 has caught up with the upper slide 15.

The second control valve unit 6 comprises a directional valve 18 which determines the steering direction and also the control flow, and a pressure-reducing valve 19 which ensures that the pilot pressure is limited to a defined level, irrespective of the pump pressure. The control valve unit 6 also comprises two electrically controlled valves 20, 21 which are regulated indirectly via an electric signal from the lever 7. The electrically controlled valves 20, 21 are arranged in parallel with one another on a line 28. The line 28 is also connected to the directional valve 18 on both its sides for movement thereof counter to spring force. The pump 8 is connected to the electric valves 20, 21 via a line 29 which is connected to the line 28 between the electric valves. The result of this is that activation of the right-hand valve 21, via the lever 7, produces an oil pressure on the directional valve 18 for movement of the latter to the right in the figure counter to a spring force, and activation of the left-hand valve 20, via the lever 7, produces an oil pressure on the directional valve 18 for movement of the latter to the left in the figure counter to a spring force.

For steering to the right, the electrically controlled right-hand valve 21 is therefore activated, which then applies an oil pressure, which is proportional to the electric signal, to the directional valve 18. The higher the electric signal (oil pressure), the more the directional valve 18 is operated, and a greater control flow is thus obtained. For steering to the left, the electrically controlled left-hand valve 20 is therefore activated in a corresponding way.

When the control valve unit 6 is not activated, the LS signal is connected from the shuttle valve 10 (see line 50) to the tank 9 via the directional valve 18 and is thus in principle pressureless. The same applies for the first control valve unit 4, which also connects the LS signal to the tank 9 when it is not activated. The pump 8 is thus adjusted down and maintains only a low pressure. The two electrically controlled valves 20, 21 are therefore arranged in such a way that activation of one valve results in movement of the directional valve 18 in one direction, and activation of the other valve results in movement of the directional valve 18 in the other direction.

In order to prevent negative pressures and pressures exceeding a defined maximum pressure in the system, the system comprises a top-up valve and a choke valve, which are indicated together by reference number 22. The function of the top-up valve and the choke valve is previously known and will therefore not be described in detail here.

The first control valve unit 4 and the second control valve unit 6 are arranged on parallel lines between the pump 8 and the hydraulic cylinders 2, 3. Depending on which control means the driver selects to steer the vehicle, that is to say the steering wheel 5 or the lever 7, the hydraulic cylinders 2, 3 are controlled by the control valve unit connected to the control means selected. The other control valve unit, which is connected to the control means which is not being used, is then in an inactive state.

The system 1 also comprises a prioritizing means 23 which is adapted to ensure that the wheel steering has top priority, that is to say if the steering wheel 5 and the lever 7 are used at the same time, it is the wheel which prevails, or takes precedence. Prioritization is carried out completely hydraulically.

The prioritizing means 23 comprises a prioritizing valve in the form of a sequential valve 24 and two throttles 25, 26. The sequential valve 24 is spring-loaded, and a line 27 is connected to the sequential valve 24, for opening the latter by oil pressure counter to the spring force, and to the steering cylinder 2, 3 via the first control valve unit 4. When the first control valve unit 4 is in a neutral position, the sequential valve is not affected, but when the first control valve unit 4 is moved, via operation of the steering wheel 5, the sequential valve 24 is connected into the pressure of the steering cylinder 2, 3, and the sequential valve then opens.

The sequential valve 24 is also arranged on a line 31 which connects the two sides of the directional valve 18. To be precise, the sequential valve is arranged in parallel with the two electrically controlled valves 20, 21 and connected to a respective line out from these to the directional valve 18 in such a way that, when the sequential valve 24 is loaded with sufficiently high pressure, it opens, and the pressure on the two sides of the directional valve 18 is, to a greater or lesser extent, equalized.

The prioritization is explained in detail below. When the driver uses the steering lever 7 and effects steering to the right, an oil pressure is applied to the directional valve 18 via the electrically controlled right-hand valve 21, and the level of the oil pressure depends on the extent to which the lever 7 is operated. The other side of the directional valve 18 is drained to the tank via the electrically controlled left-hand valve 20. If, in this situation, the driver steers with the wheel at the same time, the first control valve unit 4 connects the pressure (the LS signal) of the steering cylinder 2, 3 to the sequential valve 24 which then opens.

When the sequential valve 24 opens, flow takes place from one side of the directional valve 18 to its other side, which results in a certain degree of pressure equalization, and the directional valve 18 thus begins to close. How much it closes depends on the degree of pressure equalization. The degree of pressure equalization depends on how great the pilot flow is from the right-hand electric valve 21 and also the pressure drop across the throttle 26 on the line 30 for the LS signal and the left-hand electric valve 20. The degree of prioritization, that is to say the extent to which the wheel steering is to prevail over the lever steering, can be set by selection of the size of the throttle 26. The other throttle 25 forming part of the prioritizing means is arranged on the line 27 to the sequential valve 24, and the connection time (ramp) for prioritization can be set so that connection is less abrupt by selection of the size of this throttle.

The first and second control valve units 4, 6 are therefore hydraulically interconnected via said prioritizing means 23 in parallel with the steering cylinders 2, 3.

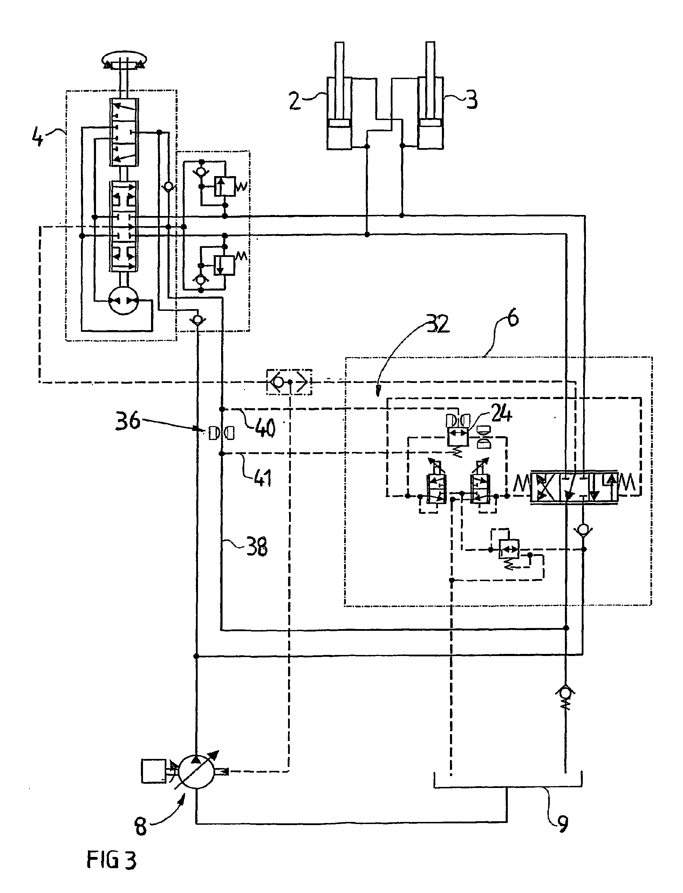

Figures 3-6 show alternative embodiments of the invention. Only the differences relative to the embodiment illustrated in Figure 2 and described above will be described below.

According to the embodiments illustrated in Figures 3-6, the prioritizing means 32-35 is adapted for sensing whether flow occurs in the first control valve unit 4 for the steering wheel 5. When such a flow is registered, prioritization is activated. According to embodiments 2-5, the system comprises an element 36, 37, 44-47 which is connected to a hydraulic oil line and adapted to bring about a pressure difference on different sides of the prioritizing valve 24 for the purpose of moving the latter.

According to the second embodiment (see Figure 3), said pressure-difference-generating element comprises a throttle 36 for bringing about a pressure difference upstream of the throttle relative to downstream of the throttle. The flow is therefore registered as a pressure drop across the throttle 36. The throttle 36 is arranged on a line 38 between the first control valve unit 4 and the tank 9, that is to say after the control valve unit 4 (the outlet of the control valve unit) of the steering wheel 5. On both sides of the throttle 36, lines 40, 41 are connected to the line 38, which lines 40, 41 are also connected to the sequential valve 24 for regulation of the latter.

A hydraulic signal for opening the sequential valve 24 is therefore sent when the first control valve unit 4 is moved into a position in which the steering cylinders 2, 3 are supplied with hydraulic oil from the pump 8 via the first control valve unit 4. This embodiment means that, in order for prioritization to be initiated, there must be a flow in the port of the control valve unit 4 to the tank 9, which results in delayed operation, which means that the steering wheel has to be turned more than according to the first embodiment in order for prioritization to start. This is advantageous in cases where it is desirable that prioritization does not start simply because the driver unintentionally touches/moves the steering wheel 5.

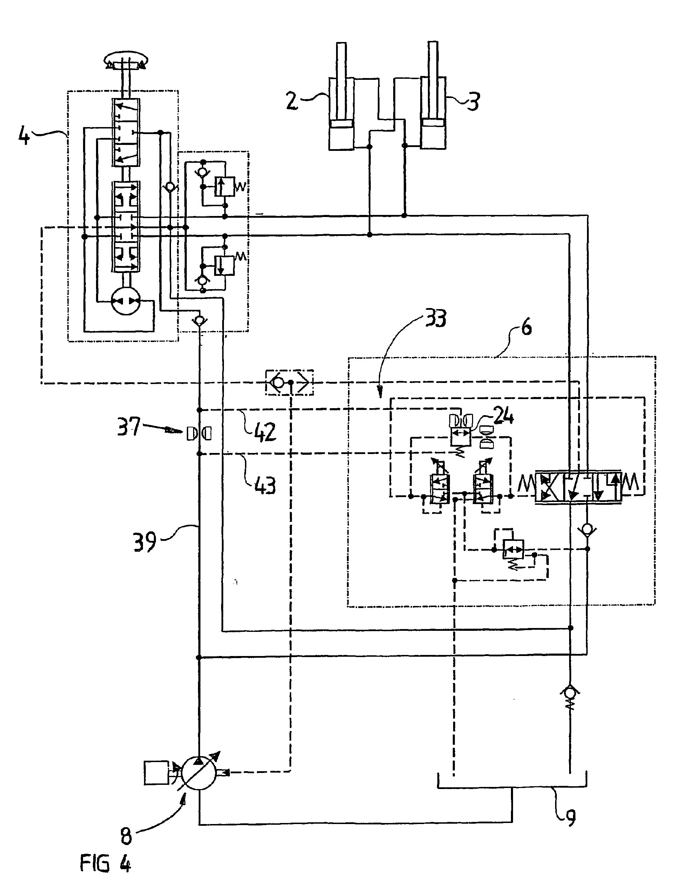

The flow is also recorded as a pressure drop across a throttle 37 according to the third embodiment (see Figure 4). The throttle 37 is arranged on a line 39 between the pump 8 and the first control valve unit 4, that is to say before the control valve unit 4 (the inlet of the control valve unit) of the steering wheel 5. On both sides of the throttle 37, lines 42, 43 are connected to the line 39, which lines 42, 43 are also connected to the sequential valve 24 for regulation of the latter. A hydraulic signal for opening the sequential valve 24 is therefore sent when the first control valve unit 4 is moved into a position in which the steering cylinders 2, 3 are supplied with hydraulic oil from the pump 8 via the first control valve unit 4.

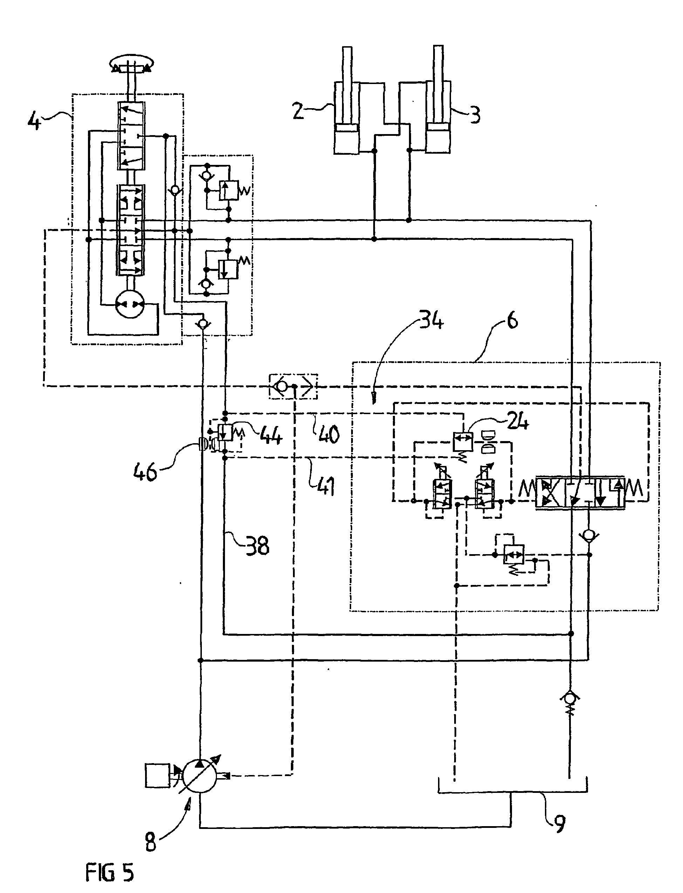

The fourth embodiment of the invention illustrated in Figure 5 corresponds to the second embodiment illustrated in Figure 3 with the difference that the flow is registered as a pressure drop across a valve, to be precise a back-up valve 44. The back-up valve 44 is spring-loaded and has a certain, relatively low opening pressure in order that a pressure drop will arise, which is controlled by the spring. Arranged in parallel with the back-up valve 44 is a throttle 46, the purpose of which is to equalize the pressure drop when the flow ceases.

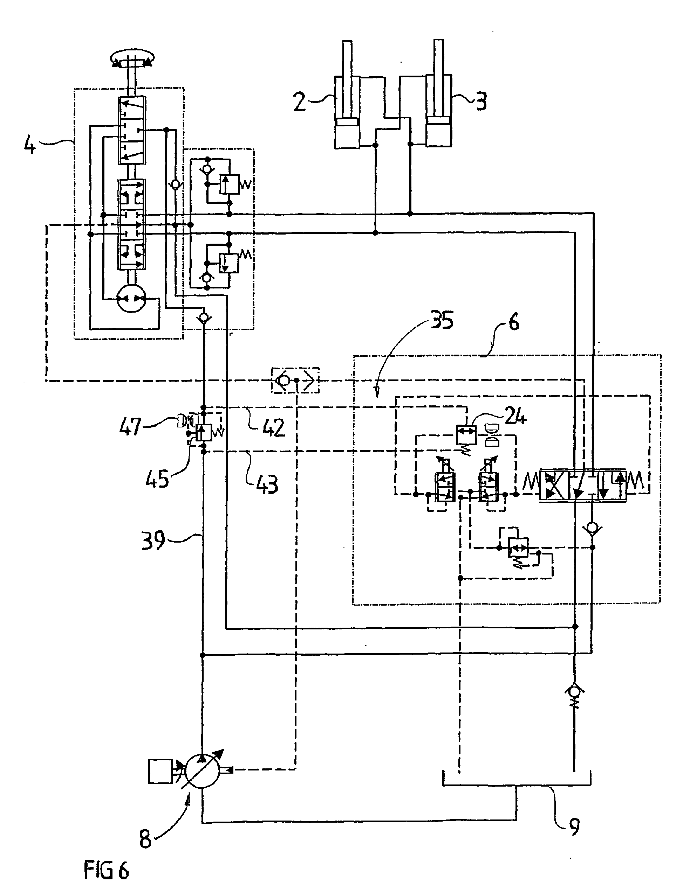

The fifth embodiment of the invention illustrated in Figure 6 corresponds to the third embodiment illustrated in Figure 4 with the difference that the flow is registered as a pressure drop across a valve, to be precise a back-up valve 45. The backup valve 45 has a certain opening pressure in order that a pressure drop will arise. Arranged in parallel with the back-up valve 45 is a throttle 47, the purpose of which is to equalize the pressure drop when the flow ceases.

In the fourth and fifth embodiments, use is made of a relatively small throttle 46, 47 which is intended to equalize the pressure on the two sides of the back-up valve 44, 45 when there is no flow through the back-up valve 44, 45. Each of the back-up valves 44, 45 gives a pressure drop of, for example, 3 bar. The pressure drop is in principle independent of the flow. This produces relatively small losses and affords opportunities for a system which is economical in terms of fuel. The throttle 46, 47 means that a certain steering wheel speed has to be reached in order for prioritization to begin.

Depending on the selection of other components in the system, and in particular the first control valve unit 4, different solutions among those according to the five embodiments may be most advantageous.

The invention is not to be regarded as being limited to the illustrative embodiments described above, but a number of further variants and modifications are conceivable within the scope of the following patent claims. In some cases, it is desirable to manipulate the electric signal from the lever (ramps, maximum levels etc.), which can be effected by virtue of the signals from lever to hydraulic valve being transmitted via a machine computer.

## Claims

1. A system for controlling at least one hydraulic cylinder (2, 3) comprising a first control valve unit (4), which is connected to said hydraulic cylinder for regulation of the latter, a first operable control means (5) which is adapted for controlling the first control valve unit, a second control valve unit (6), which is also connected to said hydraulic cylinder for regulation of the latter, and a second operable control means (7) which is adapted for controlling the second control valve unit, the system comprising means (23, 32, 33, 34, 35) which is controlled via hydraulics for prioritizing the first control means, wherein the second control valve unit (6) comprises a directional valve (18) which is connected to the hydraulic cylinder (2, 3) for regulation of the latter, **characterized in that** the prioritizing means (23, 32, 33, 34, 35) is controlled in such a way that the effect of the second control means (6) on the regulation of the hydraulic cylinder (2, 3) is at least substantially reduced as soon as the first control means (5) is operated by that the prioritizing means (23, 32, 33, 34, 35) is adapted, for prioritization, to pressure equalize to a certain degree on the sides of the directional valve (18) and thereby bring the directional valve (18) of the second control valve unit (6) into a position in which its effect on the regulation of the hydraulic cylinder (2, 3) is at least substantially reduced, irrespective of the position of the second control means (7).

2. The system as claimed in claim 1, **characterized in that** the prioritizing means (23, 32, 33, 34, 35) is connected to the first control valve unit (4) in such a way that prioritization is initiated when the first control valve unit is moved from a neutral position.

3. The system as claimed in any one of the preceding claims, **characterized in that** the first and second control valve units (4, 6) are hydraulically interconnected via said prioritizing means (23, 32, 33, 34, 35) in parallel with said hydraulic cylinder (2, 3).

4. The system as claimed in any one of the preceding claims, **characterized in that** the system comprises a pump (8) which is adapted to deliver a pressure depending on the load to which the system is subjected.

5. The system as claimed in any one of the preceding claims, **characterized in that** the prioritizing means (23, 32, 33, 34, 35) comprises a prioritizing valve (24) which is hydraulically connected to the second control valve unit (6) for regulation of the latter.

6. The system as claimed in claim 5, **characterized in that** the prioritizing valve (24) is hydraulically connected to the first control valve unit (4) in such a way that the prioritizing valve is regulated when control of the first control valve unit takes place.

7. The system as claimed in any one of the preceding claims, **characterized in that** the prioritizing means (32, 33, 34, 35) comprises a flow-sensing element (36, 37, 44, 45, 46, 47) which is connected to a main line (38) between the first control valve unit (4) and the pump (8) of the system or a main line (39) between the first control valve unit (4) and the tank (9) of the system for initiation of prioritization when there is a flow in the first control valve unit (4).

8. The system as claimed in claim 5 or 6 and 7, **characterized in that** said flow-sensing element (36, 37, 44, 45, 46, 47) is adapted to bring about a pressure difference on different sides of the prioritizing valve (24) for the purpose of moving the latter.

9. The system as claimed in claim 8, **characterized in that** said pressure-difference-generating element comprises a throttle (36, 37) adapted for throttling the flow in the main line (38, 39) for bringing about a pressure difference upstream of the throttle relative to downstream of the throttle.

10. The system as claimed in claim 9, **characterized in that** said pressure-difference-generating element comprises a spring-loaded back-up valve (44, 45) arranged on said main line (38, 39).

11. The system as claimed in claim 10, **characterized in that** said pressure-difference-generating element also comprises a throttle (46, 47) adapted for equalizing the pressure on the two sides of the back-up valve (44, 45) when there is no flow through the latter.

12. The system as claimed in claim 5 or 6,
**characterized in that** the prioritizing valve (24) is connected to a line (27) which is connected to the pump (8) for controlling the prioritizing valve depending on the load.

13. The system as claimed in any one of the preceding claims, **characterized in that** the system comprises two hydraulic cylinders (2, 3) which are adapted in such a way that the piston side (11) of a first of the hydraulic cylinders (2) and the piston-rod side (12) of a second of the hydraulic cylinders (3) are connected to the pump (8) of the system when one of said control valve units (4, 6) is arranged in a first position, and **in that** the piston-rod side (13) of the first hydraulic cylinder (2) and the piston side (14) of the second hydraulic cylinder (3) are connected to the pump of the system when said control valve unit is arranged in a second position.

14. A vehicle (100) comprising a front part (101) and a rear part (102), which parts are interconnected in an articulated manner, the parts being rotatable relative to one another around an articulation (105) via two hydraulic cylinders (2, 3) arranged between the two parts, **characterized in that** the vehicle comprises a system as claimed in claim 13 for controlling the relative movement of the parts (101, 102).

15. The vehicle as claimed in claim 14, **characterized in that** the vehicle (100) consists of a loading machine.

## Patentansprüche

1. System zur Steuerung von wenigstens einem Hydraulikzylinder (2, 3) mit einer ersten Steuerventileinheit (4), die mit dem Hydraulikzylinder zur Regulierung des letzteren verbunden ist, einer ersten betätigbaren Steuereinrichtung (5), die für eine Steuerung der ersten Steuerventileinheit angepasst ist, einer zweiten Steuerventileinheit (6), die ebenfalls mit dem Hydraulikzylinder zur Regulierung des letzteren verbunden ist, und einer zweiten betätigbaren Steuereinrichtung (7), die für eine Steuerung der zweiten Steuerventileinheit angepasst ist, wobei das System eine hydraulisch gesteuerte Einrichtung (23, 32, 33, 34, 35) zur Priorisierung der ersten Steuereinrichtung umfasst, wobei die zweite Steuerventileinheit (6) ein Wegeventil (18) umfasst, das mit dem Hydraulikzylinder (2, 3) zur Regulierung des letzteren verbunden ist, **dadurch gekennzeichnet, dass** die Priorisierungseinrichtung (23, 32, 33, 34, 35) derart gesteuert wird, dass die Wirkung der zweiten Steuereinrichtung (6) auf die Regulierung des Hydraulikzylinders (2, 3), sobald die erste Steuereinrichtung (5) betätigt wird, wenigstens im Wesentlichen **dadurch** reduziert wird, dass die Priorisierungseinrichtung (23, 32, 33, 34, 35) angepasst ist, zur Priorisierung bis zu einem gewissen Grad den Druck auf den Seiten des Wegeventils (18) auszugleichen und **dadurch** das Wegeventil (18) der zweiten Steuerventileinheit (6) in eine Position zu bringen, in der ihre Wirkung auf die Regulierung des Hydraulikzylinders (2, 3) ungeachtet der Position der zweiten Steuereinrichtung (7) wenigstens im Wesentlichen reduziert wird.

2. System nach Anspruch 1, **dadurch gekennzeichnet, dass** die Priorisierungseinrichtung (23, 32, 33, 34, 35) mit der ersten Steuerventileinheit (4) derart verbunden ist, dass die Priorisierung initiiert wird, wenn die erste Steuerventileinheit aus einer neutralen Position bewegt wird.

3. System nach einem der vorhergehenden Ansprüche, **dadurch gekennzeichnet, dass** die ersten und zweiten Steuerventileinheiten (4, 6) über die Priorisierungseinrichtung (23, 32, 33, 34, 35) parallel zu dem Hydraulikzylinder (2, 3) hydraulisch miteinander verbunden sind.

4. System nach einem der vorhergehenden Ansprüche, **dadurch gekennzeichnet, dass** das System eine Pumpe (8) umfasst, die für eine Lieferung eines Drucks in Abhängigkeit von der Last, der das System unterworfen wird, angepasst ist.

5. System nach einem der vorhergehenden Ansprüche, **dadurch gekennzeichnet, dass** die Priorisierungseinrichtung (23, 32, 33, 34, 35) ein Priorisierungsventil (24) umfasst, das mit der zweiten Steuerventileinheit (6) zur Regulierung der letzteren hydraulisch verbunden ist.

6. System nach Anspruch 5, **dadurch gekennzeichnet, dass** das Priorisierungsventil (24) mit der ersten Steuerventileinheit (4) derart hydraulisch verbunden ist, dass das Priorisierungsventil reguliert wird, wenn die Steuerung der ersten Steuerventileinheit stattfindet.

7. System nach einem der vorhergehenden Ansprüche, **dadurch gekennzeichnet, dass** die Priorisierungseinrichtung (32, 33, 34, 35) ein Strömungserfassungselement (36, 37, 44, 45, 46, 47) umfasst, das mit einer Hauptleitung (38) zwischen der ersten Steuerventileinheit (4) und der Pumpe (8) des Systems oder einer Hauptleitung (39) zwischen der ersten Steuerventileinheit (4) und dem Tank (9) des Systems zur Initiierung der Priorisierung, wenn es eine Strömung in der ersten Steuerventileinheit (4) gibt, verbunden ist.

8. System nach Anspruch 5 oder 6 und 7, **dadurch gekennzeichnet, dass** das Strömungserfassungselement (36, 37, 44, 45, 46, 47) für ein Herbeiführen eines Druckunterschieds auf unterschiedlichen Seiten des Priorisierungsventils (24) zum Zwecke des Bewegens des letzteren angepasst ist.

9. System nach Anspruch 8, **dadurch gekennzeichnet, dass** das Druckunterschiedserzeugungselement eine Drossel (36, 37) umfasst, die für ein Drosseln der Strömung in der Hauptleitung (38, 39) zum Herbeiführen eines Druckunterschieds stromaufwärts der Drossel relativ zu stromabwärts der Drossel angepasst ist.

10. System nach Anspruch 9, **dadurch gekennzeichnet, dass** das Druckunterschiedserzeugungselement ein an der Hauptleitung (38, 39) angeordnetes federbelastetes Back-up-Ventil (44, 45) umfasst.

11. System nach Anspruch 10, **dadurch gekennzeichnet, dass** das Druckunterschiedserzeugungselement ebenfalls eine Drossel (46, 47) umfasst, die für ein Ausgleichen des Drucks auf den zwei Seiten des Back-up-Ventils (44, 45), wenn es keine Strömung durch das letztere gibt, angepasst ist.

12. System nach Anspruch 5 oder 6, **dadurch gekennzeichnet, dass** das Priorisierungsventil (24) mit einer Leitung (27) verbunden ist, die mit der Pumpe (8) zur Steuerung des Priorisierungsventils in Abhängigkeit von der Last verbunden ist.

13. System nach einem der vorhergehenden Ansprüche, **dadurch gekennzeichnet, dass** das System zwei Hydraulikzylinder (2, 3) umfasst, die derart angepasst sind, dass die Kolbenseite (11) eines ersten der Hydraulikzylinder (2) und die Kolbenstangenseite (12) eines zweiten der Hydraulikzylinder (3) mit der Pumpe (8) des Systems verbunden sind, wenn eine der Steuerventileinheiten (4, 6) in einer ersten Position angeordnet ist, und dass die Kolbenstangenseite (13) des ersten Hydraulikzylinders (2) und die Kolbenseite (14) des zweiten Hydraulikzylinders (3) mit der Pumpe des Systems verbunden sind, wenn die Steuerventileinheit in einer zweiten Position angeordnet ist.

14. Fahrzeug (100) mit einem Vorderteil (101) und einem Hinterteil (102), die gelenkig miteinander verbunden und über zwei zwischen den zwei Teilen angeordnete Hydraulikzylinder (2, 3) relativ zueinander um ein Gelenk (105) drehbar sind, **dadurch gekennzeichnet, dass** das Fahrzeug ein System zur Steuerung der Relativbewegung der Teile (101, 102) nach Anspruch 13 umfasst.

15. Fahrzeug nach Anspruch 14, **dadurch gekennzeichnet, dass** das Fahrzeug (100) aus einer Lademaschine besteht.

## Revendications

1. Système pour commander au moins un vérin hydraulique (2, 3), comprenant une première unité formant soupape de commande (4), qui est reliée audit vérin hydraulique pour une régulation de ce dernier, des premiers moyens de commande opérationnels (5) qui sont adaptés pour commander la première unité formant soupape de commande, une seconde unité formant soupape de commande (6), qui est également reliée audit vérin hydraulique pour une régulation de ce dernier, et des seconds moyens de commande opérationnels (7) qui sont adaptés pour commander la seconde unité formant soupape de commande, les systèmes comprenant des moyens (23, 32, 33, 34, 35) qui sont commandés via des éléments hydrauliques pour prioriser les premiers moyens de commande, dans lequel la seconde unité formant soupape de commande (6) comprend une soupape directionnelle (18) qui est reliée au vérin hydraulique (2, 3) pour une régulation de ce dernier, **caractérisé en ce que** les moyens de priorisation (23, 32, 33, 34, 35) sont commandés de telle manière que l'effet des seconds moyens de commande (6) sur la régulation du vérin hydraulique (2, 3) est au moins sensiblement réduit dès que les premiers moyens de commande (5) sont actionnés par ces moyens de priorisation (23, 32, 33, 34, 35) adaptés, pour une priorisation, pour égaliser la pression à un certain degré sur les côtés de la soupape directionnelle (18), et amener ainsi la soupape directionnelle (18) de la seconde unité formant soupape de commande (6) dans une position dans laquelle son effet sur la régulation du vérin hydraulique (2, 3) est au moins sensiblement réduit, indépendamment de la position des seconds moyens de commande (7).

2. Système selon la revendication 1, **caractérisé en ce que** les moyens de priorisation (23, 32, 33, 34, 35) sont reliés à la première unité formant soupape de commande (4) de telle manière qu'une priorisation est initiée lorsque la première unité formant soupape de commande est déplacée depuis une position neutre.

3. Système selon l'une quelconque des revendications précédentes, **caractérisé en ce que** les première et seconde unités formant soupape de commande (4, 6) sont interconnectées de manière hydraulique via lesdits moyens de priorisation (23, 32, 33, 34, 35) parallèlement audit vérin hydraulique (2, 3).

4. Système selon l'une quelconque des revendications précédentes, **caractérisé en ce que** le système comprend une pompe (8) qui est adaptée pour délivrer une pression selon la charge à laquelle le système est soumis.

5. Système selon l'une quelconque des revendications précédentes, **caractérisé en ce que** les moyens de priorisation (23, 32, 33, 34, 35) comprennent une soupape de priorisation (24) qui est reliée de manière hydraulique à la seconde unité formant soupape de commande (6) pour une régulation de cette dernière.

6. Système selon la revendication 5, **caractérisé en ce que** la soupape de priorisation (24) est reliée de manière hydraulique à la première unité formant soupape de commande (4) de telle manière que la soupape de priorisation est régulée lorsqu'une commande de la première unité formant soupape de commande a lieu.

7. Système selon l'une quelconque des revendications précédentes, **caractérisé en ce que** les moyens de priorisation (32, 33, 34, 35) comprennent un élément de détection d'écoulement (36, 37, 44, 45, 46, 47) qui est relié à une ligne principale (38) entre la première unité formant soupape de commande (4) et la pompe (8) du système, ou une ligne principale (39) entre la première unité formant soupape de commande (4) et le réservoir (9) du système pour le déclenchement d'une priorisation lorsqu'il y a un écoulement dans la première unité formant soupape de commande (4).

8. Système selon la revendication 5 ou 6 et 7, **caractérisé en ce que** ledit élément de détection d'écoulement (36, 37, 44, 45, 46, 47) est adapté pour provoquer une différence de pression sur des côtés différents de la soupape de priorisation (24) pour déplacer cette dernière.

9. Système selon la revendication 8, **caractérisé en ce que** ledit élément générateur de différence de pression comprend un étrangleur (36, 37) adapté pour étrangler l'écoulement dans la ligne principale (38, 39) afin de provoquer une différence de pression en amont de l'étrangleur par rapport à l'aval de l'étrangleur.

10. Système selon la revendication 9, **caractérisé en ce que** ledit élément générateur de différence de pression comprend un clapet de refoulement chargé par ressort (44, 45) agencé sur ladite ligne principale (38, 39).

11. Système selon la revendication 10, **caractérisé en ce que** ledit élément générateur de différence de pression comprend également un étrangleur (46, 47) adapté pour égaliser la pression des deux côtés du clapet de refoulement (44, 45) lorsqu'il n'y a pas d'écoulement à travers ce dernier.

12. Système selon la revendication 5 ou 6, **caractérisé en ce que** la soupape de priorisation (24) est reliée à une ligne (28) qui est reliée la pompe (8) pour commander la soupape de priorisation selon la charge.

13. Système selon l'une quelconque des revendications précédentes, **caractérisé en ce que** le système comprend deux vérins hydrauliques (2,3) qui sont adaptés de telle sorte que le côté de piston (11) d'un premier des vérins hydrauliques (2) et le côté de tige de piston (12) d'un second des vérins hydrauliques (3) sont reliés à pompe (8) du système lorsqu'une desdites unités formant soupape de commande (4, 6) est agencée dans une première position, et **en ce que** le côté de tige de piston (13) du premier vérin hydraulique (2) et le côté de piston (14) du second vérin hydraulique (3) sont reliés à la pompe du système lorsque ladite unité formant soupape de commande est agencée dans une seconde position.

14. Véhicule (100) comprenant une partie avant (101) et une partie arrière (102), lesquelles parties sont interconnectées d'une manière articulée, les parties pouvant tourner l'une par rapport à l'autre autour d'une articulation (105) via deux vérins hydrauliques (2, 3) agencés entre les deux parties, **caractérisé en ce que** le véhicule comprend un système selon la revendication 13 pour commander le déplacement relatif des parties (101, 102).

15. Véhicule selon la revendication 14, **caractérisé en ce que** le véhicule (100) est constitué d'une machine de chargement.
